(19) Europäisches Patentamt
European Patent Office
Office européen des brevets

(11) EP 1 047 178 B1

(12) **EUROPEAN PATENT SPECIFICATION**

(45) Date of publication and mention of the grant of the patent:
**05.01.2011 Bulletin 2011/01**

(51) Int Cl.:
**H02M 3/335** (2006.01)

(21) Application number: **00108751.9**

(22) Date of filing: **25.04.2000**

(54) **Resonant DC-to-DC converter and method of controlling the same**

Resonanter Gleichspannungswandler und Steuerungsverfahren dazu

Convertisseur continu-continu à résonance et sa méthode de commande

(84) Designated Contracting States:
**DE ES FR GB IT SE**

(30) Priority: **23.04.1999 IT TO990330**

(43) Date of publication of application:
**25.10.2000 Bulletin 2000/43**

(73) Proprietor: **C.R.F. Società Consortile per Azioni**
**10043 Orbassano (TO) (IT)**

(72) Inventors:
• **Catona, Giuseppe**
**10147 Torino (IT)**
• **Casellato, Giancarlo**
**10141 Torino (IT)**
• **Groppo, Riccardo**
**10060 Roletto (IT)**

(74) Representative: **Cerbaro, Elena et al**
**STUDIO TORTA**
**Via Viotti 9**
**10121 Torino (IT)**

(56) References cited:
**EP-A- 0 757 428      US-A- 5 349 514**
**US-A- 5 497 311      US-A- 5 680 034**

• **LIO J - B ET AL: "SINGLE-SWITCH SOFT-SWITCHING FLYBACK CONVERTER" ELECTRONICS LETTERS,GB,IEE STEVENAGE, vol. 32, no. 16, 1 August 1996 (1996-08-01), pages 1429-1430, XP000624446 ISSN: 0013-5194**

**Description**

The present invention relates to a resonant-transition dc-to-dc converter, and to a method of controlling the resonant transition of a dc-to-dc converter.

In particular, the present invention may be used to advantage, though not exclusively, in flyback and boost resonant-transition dc-to-dc converters, to which the following description refers purely by way of example.

As is known, at present, electronic central control units for controlling vehicle functions are supplied by circuits comprising linear power supplies, i.e. in which the transistors operate permanently in the linear region.

Increasing demand for more compact on-vehicle electronic circuits has led, among other things, to research into solutions for also reducing power dissipation and maintaining a substantially constant dissipation efficiency - i.e. the power dissipated per unit of area - of the supply circuits, so as to ensure reliability of the supply circuits and the electronic central control units powered by them.

One proposed solution is to use supply circuits comprising switching dc-to-dc converters featuring inductive components, the charging and discharging of which are controlled by active components defined by control transistors switching between a saturation and a cutoff condition (on/off).

More detailed information about flyback or boost switching dc-to-dc converters can be found, for example, in "Principles of Power Electronics", Addison Wesley - J. G. Kassakian, M. F. Schlecht, G. C. Verghese.

In switching dc-to-dc converters, the power dissipated during switching - also known as switching losses - is directly proportional to the switching frequency of the active components, which therefore cannot be so high as to result in switching losses making the use of such power supply circuits unfeasible.

This clashes, however, with the need for very high operating frequencies to reduce the size of the inductive components, the compactness of which, as is known, is inversely proportional to operating frequency.

One solution permitting operating frequencies high enough to reduce the size of the inductive components while at the same time limiting the switching losses of the active components is known as the "Snubber technique", which employs a capacitive element in parallel with the control transistor, and which reduces the power dissipated by the control transistor by draining part of the current flowing in the transistor when this switches.

This technique, however, also calls for a discharge circuit to discharge the capacitive element completely when the control transistor is cut off, so that, the instant the control transistor switches to the saturation state, the voltage at its terminals is substantially zero and the switching losses therefore greatly reduced. More detailed information about the Snubber technique is also to be found, for example, in the text mentioned above.

A more recent proposal for increasing operating frequencies while at the same time limiting switching losses is to employ resonant-transition dc-to-dc converters, which have much the same circuit structure as switching dc-to-dc converters, but differ as regards operation control.

More specifically, in resonant-transition dc-to-dc converters, to reduce power dissipation during switching, the control transistors for charging and discharging the inductive and capacitive components are turned on or off when the current flowing in them or the voltage at their terminals is zero respectively.

All known resonant-transition dc-to-dc converters have the drawback of having fairly complex circuit structures and employing a large number of additional components for detecting zero current flow in, or zero voltage at the terminals of, the control transistors.

It is an object of the present invention to provide a resonant-transition, DC-DC converter having a simpler circuit structure and reduced switching losses as compared to known types.

J. B. Lio et al, "Single-switch soft-switching flyback converter, Electronics Letters, vol. 32, No. 16, 1st August 10096, pages 1429-1430, XP 000624446, ISSN 0013-5194, discloses a control scheme to achieve soft-switching in a single-switch flyback converter having a circuit architecture according to the pre-characterizing part of claim 1.

US-A-5 680 034 discloses a pulse width modulated (PWM) controller for resonant converters, which controls a zero-voltage switching resonant power converter or inverter. The on time of the power switch of the converter or inverter is varied by an error amplifier such that the output voltage of the converter or inverter maintains proportionality to a reference voltage. The off time is terminated by a switch-voltage detector when the voltage across the power switch (110) drops below a threshold voltage due to the natural resonance of the external resonating capacitor and inductors. In some embodiments, a single timing capacitor is employed both for determining the on time and the off time. In other embodiments, two timing capacitors are employed for separately determining the maximum allowed off time and the variable on time. A cycle-by-cycle current limit circuit comprising a current sensor, a comparator, and an R-S latch may be added to the circuits representing each of the embodiments. By incorporating a soft start subcircuit and an overlap detector, protection against overdissipation of the power switch caused by loss of zero-voltage switching can also be implemented. The soft start subcircuit can also be triggered by a voltage detector, which monitors the output voltage of the power converter or some other voltage within the system, such as the peak voltage across the power switch (110), to effectively implement overvoltage protection.

According to the present invention, a resonant-transition, DC-DC converter is provided, as claimed in the appended claims.

A preferred, non-limiting embodiment of the present invention will be described by way of example with reference to the accompanying drawings, in which:

Figure 1 shows a circuit diagram of a flyback resonant-transition dc-to-dc converter in accordance with a first embodiment of the present invention;
Figure 2 shows time graphs of the current flow in, and the voltage at the terminals of, the control transistor forming part of the Figure 1 dc-to-dc converter;
Figure 3 shows a circuit diagram of a flyback resonant-transition dc-to-dc converter in accordance with a second embodiment of the present invention.

The present invention is based on the principle of only switching the control transistor from the cutoff to the saturation condition when the Snubber capacitor is discharged naturally and the voltage at its terminals is therefore substantially zero.

To do this, according to a first embodiment of the present invention, the voltage at the terminals of the Snubber capacitor is measured directly, and the control transistor is only switched from the cutoff to the saturation condition when the measured voltage is less than or equal to a predetermined threshold value close to zero.

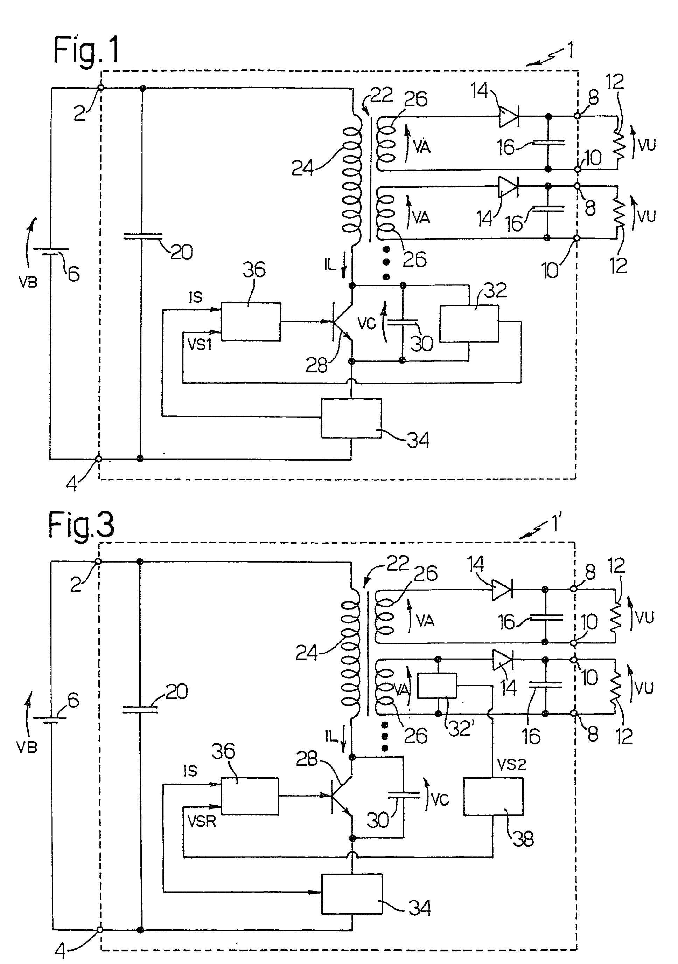

Number 1 in Figure 1 indicates as a whole a flyback resonant-transition dc-to-dc converter in accordance with a first embodiment of the present invention.

Converter 1 comprises a first and a second input terminal 2, 4 connected respectively, in use, to the positive and negative poles of an electrical energy source 6, e.g. a battery, supplying a supply voltage VB; and a number of pairs of output terminals (only two shown in Figure 1), each comprising a first and a second output terminal 8, 10, between which is connected, in use, a respective load represented in Figure 1 by a resistor 12.

Converter 1 comprises a stabilizing capacitor 20 connected between first and second input terminals 2, 4; a transformer 22 comprising a primary winding 24 interposed between first and second input terminals 2, 4, and a number of secondary windings 26, each connected to a respective pair of output terminals 8, 10 via a diode 14 and a capacitor 16, as described later on; a bipolar or MOSFET control transistor 28 - bipolar in the example shown - in series with primary winding 24; a Snubber capacitor 30 in parallel with control transistor 28; a first comparator circuit 32 in parallel with Snubber capacitor 30; a second comparator circuit 34 in series with control transistor 28; and a control circuit 36 for controlling control transistor 28.

More specifically, primary winding 24 has a first terminal connected to first input terminal 2 of converter 1; and a second terminal connected to the collector terminal of control transistor 28, which has the emitter terminal connected to second input terminal 4 of converter 1 via second comparator circuit 34, and the base terminal receiving a logic control signal T, which, at a high logic value, turns on control transistor 28 (which can be likened to a closed switch), and, at a low logic value, turns off control transistor 28 (which can be likened to an open switch).

Each secondary winding 26 has a first terminal connected to the respective first output terminal 8 of converter 1 via respective diode 14; and a second terminal connected directly to the respective second output terminal 10. Each diode 14 has an anode terminal connected to the first terminal of secondary winding 26, and a cathode terminal connected to output terminal 8; and each capacitor 16 is connected between respective output terminals 8, 10.

The first comparator circuit 32 has a first and second input terminal connected to the terminals of Snubber capacitor 30; and an output terminal supplying a logic voltage level signal VS1, which assumes a high logic level when the voltage at the terminals of Snubber capacitor 30 is less than or equal to a first predetermined threshold value VTH1, and a low logic level when the voltage at the terminals of Snubber capacitor 30 is greater than first threshold value VTH1.

The first threshold value VTH1 conveniently ranges between zero and ten percent of the supply voltage VB supplied by electrical energy source 6. Obviously, the closer the first threshold value VTH1 is to zero, the lower the switching losses will be.

The second comparator circuit 34 has a first input terminal connected to the emitter terminal of control transistor 28; a second input terminal connected to the second input terminal 4 of converter 1; and an output terminal supplying a logic current level signal IS, which assumes a high logic level when the current flow in control transistor 28, and hence in primary winding 24, is greater than or equal to a second predetermined threshold value ITH, and a low logic level when the current is less than the second threshold value ITH.

The second threshold value ITH depends on the power requested of converter 1 and, in particular, increases alongside an increase in the difference between the desired output voltage and the actual output voltage. As such, when the output voltage of the converter tends to fall, due an increase in load, the second threshold value ITH increases in an attempt to compensate for the fall in output voltage.

Control circuit 36 has a first and second input terminal connected respectively to, and receiving voltage level signal VS1 and current level signal IS from, the output terminals of first and second comparator circuits 32, 34; and an output terminal supplying control signal T for control transistor 28.

More specifically, control signal T switches from a low to a high logic state, corresponding to turn-on of control transistor 28, when voltage level signal VS1 switches from a low to a high logic level, i.e. when the voltage at the terminals of Snubber capacitor 30 is less than or equal to first threshold value VTH1; and switches from a high to a low logic state, corresponding to turn-off of control transistor 28, when current level signal IS switches from a low to a high logic level, i.e. when the current flow in primary winding 24 of transformer 22 is greater than or equal to second threshold value ITH.

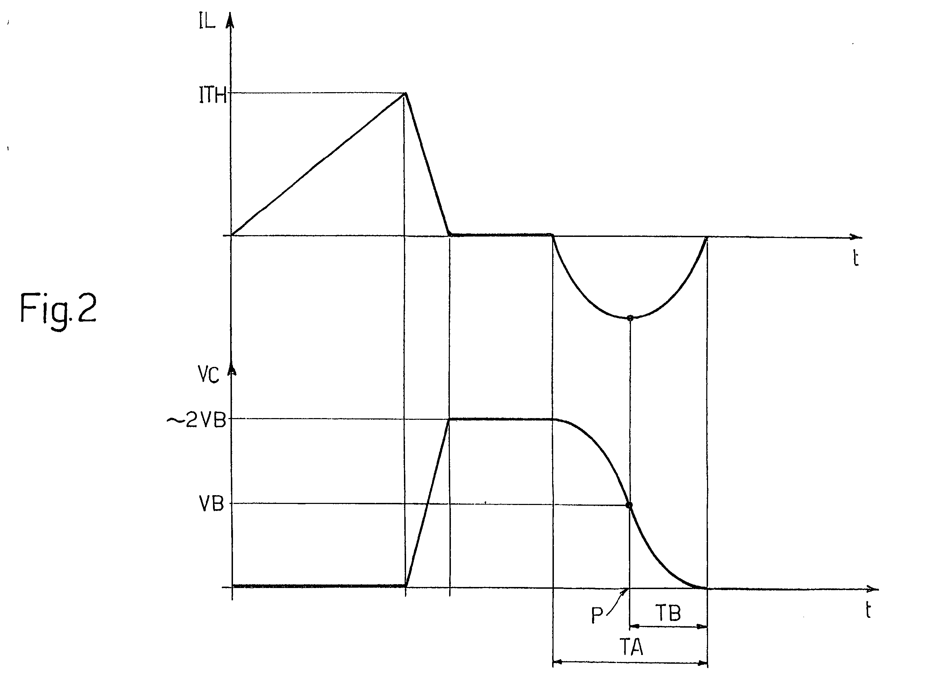

Operation of converter 1 will now be described with reference to Figure 2, which shows time graphs of the current flow IL in primary winding 24 of transformer 22, and the voltage VC at the terminals of Snubber capacitor 30.

An initial condition is assumed, in which control transistor 28 is cut off, Snubber capacitor 30 is discharged, and voltage VC and current IL are both zero.

In this condition, the voltage level signal VS1 generated by first comparator circuit 32 switches from a low to a high logic level, so that control signal T generated by control circuit 36 also switches from a low to a high logic level, thus turning on control transistor 28.

A closed loop is thus formed comprising electrical energy source 6, primary winding 24 of transformer 22, control transistor 28 and second comparator circuit 34, and a current IL increasing linearly in time flows in primary winding 24 of transformer 22 to store energy in the core of transformer 22, while the voltage VC at the terminals of Snubber capacitor 30 remains substantially nil.

When the current IL flowing in primary winding 24 of transformer 22 reaches first threshold value ITH, the current level signal IS generated by second comparator circuit 34 switches from a low to a high logic level, so that the control signal T generated by control circuit 36 switches from a high to a low logic level, thus turning off control transistor 28.

A closed loop is thus formed comprising electrical energy source 6, primary winding 24 of transformer 22, Snubber capacitor 30 and second comparator circuit 34, and the dc-to-dc converter operates in the following three steps:

- A first step, in which the current IL flowing in primary winding 24 decreases in time from value ITH to a value of substantially zero faster than the increase in current during the time interval in which control transistor 28 is closed. At this step, part of the energy stored in the core of transformer 22 is therefore transferred, minus losses, to Snubber capacitor 30, the voltage VC at the terminals of which increases from zero to a value equal to about twice the supply voltage VB supplied by the electrical energy source (in particular, equal to the supply voltage VB supplied by electrical energy source 6, plus the voltage "reflected" by secondary windings 26 onto primary winding 24 of transformer 22). Since, at this step, the voltage at the terminals of control transistor 28 increases over a relatively long period of time, the switching losses caused by control transistor 28 being turned off are extremely small.
- A second step, in which the current IL flowing in primary winding 24 remains substantially nil, the voltage at the terminals of Snubber capacitor 30 remains substantially at a value equal to about twice the supply voltage VB supplied by electrical energy source 6, and a current induced by the magnetic energy stored in the core of transformer 22 flows in secondary windings 26.

- A third step, in which resonance occurs between primary winding 24 and Snubber capacitor 30, so that a so-called resonant discharge occurs of the energy stored in Snubber capacitor 30. During this step, the current IL flowing in primary winding 24 assumes negative values and is substantially sinusoidal with a portion decreasing towards increasingly negative values (in absolute value) followed by a portion increasing once more towards zero values, while the voltage VC at the terminals of Snubber capacitor 30 decreases substantially sinusoidally to a substantially zero value.

During the resonant discharge step - which lasts about half the resonance period of the circuit formed by primary winding 24 and by Snubber capacitor 30 - when the voltage VC at the terminals of Snubber capacitor 30 reaches first threshold value VTH1, the control signal T generated by control circuit 36 switches from a low to a high logic state, thus turning control transistor 28 back on.

Control transistor 28 switches from off to on at substantially zero voltage, so that the switching losses are extremely small.

Unlike known systems, therefore, in which Snubber capacitor 30 is discharged before control transistor 28 switches from off to on, switching according to the present invention is effected when Snubber capacitor 30 is naturally discharged.

Figure 3 shows a flyback resonant-transition dc-to-dc converter in accordance with a second embodiment of the present invention, which is similar to dc-to-dc converter 1 and therefore only described below insofar as it differs from dc-to-dc converter 1, and using the same reference numbers for any parts identical with or corresponding to those already described.

The second embodiment of the present invention is based on the principle of detecting the instant in which the voltage at the terminals of Snubber capacitor 30 is zeroed, by measuring an electric quantity correlated to the voltage at the terminals of Snubber capacitor 30, as opposed to measuring the voltage itself.

More specifically, as shown in Figure 2, during the resonant discharge step, the current IL flowing in primary winding 24 of transformer 22 assumes a maximum negative value - i.e. the voltage in primary winding 24, and therefore in secondary winding 26, is nil - when the voltage at the terminals of Snubber capacitor 30 assumes a value equal to the voltage VB supplied by electrical energy source 6. This instant in time is indicated in Figure 2 by the letter P.

As the duration TA of the resonant discharge step is known, from LC resonator theory, to equal half the resonance period, i.e.

$$TA = \frac{1}{2} \cdot T_{RES} = \pi \cdot \sqrt{L \cdot C}$$

where L is the inductance of primary winding 24 of transformer 22, and C the capacitance of Snubber capacitor 30, the time TB between the instant the voltage VC at the terminals of Snubber capacitor 30 equals the supply voltage VB supplied by electrical energy source 6, and the instant in which the voltage VC at the terminals of Snubber capacitor 30 is zeroed, equals half duration TA, i.e.

$$TB = \frac{1}{4} \cdot T_{RES} = \frac{1}{2} \cdot \pi \cdot \sqrt{L \cdot C}$$

Therefore, the instant the current IL flowing in primary winding 24 of transformer 22 reaches the maximum negative value - i.e. the voltage at the terminals of secondary winding 26 is substantially zero - the voltage at the terminals of Snubber capacitor 30 equals VB, so that, after a time equal to TB, the voltage at the terminals of Snubber capacitor 30 is definitely zero, and control transistor 28 can be turned on.

Figure 3 shows a circuit diagram of a flyback resonant-transition dc-to-dc converter in accordance with a second embodiment of the present invention.

The Figure 3 dc-to-dc converter, indicated as a whole by 1', differs from dc-to-dc converter 1 by the first comparator circuit, indicated 32', being connected in parallel with one of secondary windings 26, as opposed to Snubber capacitor 30, to detect the voltage between the terminals of secondary winding 26, which voltage is correlated, via the transformation ratio of transformer 22, to the voltage in primary winding 24 of transformer 22.

More specifically, first comparator circuit 32' is connected directly to the terminals of secondary winding 26 upstream from diode 14, and generates at the output terminal a logic voltage level signal VS2, which assumes a high logic level when the voltage VA in secondary winding 26 is less than or equal to a third predetermined threshold value VTH2, and a low logic level when the voltage VA in secondary winding 26 is greater than third threshold value VTH2.

Third threshold value VTH2 conveniently ranges between zero and ten percent of the supply voltage VB supplied by electrical energy source 6 and referred back to secondary winding 26, taking into account the transformation ratio of transformer 22.

Dc-to-dc converter 1' also comprises a delay circuit 38 interposed between first comparator circuit 32' and control circuit 36 to generate a delayed level signal VSR obtained by so delaying second voltage level signal VS2 that the switching edge from the low to high logic level of the delayed voltage level signal VSR occurs when the voltage at the terminals of Snubber capacitor 30 is less than or equal to first threshold value VTH1.

More specifically, when second threshold value VTH2 assumes a zero value, the delay introduced by delay circuit 38 equals the aforementioned time TB, whereas, for other values of second threshold value VTH2, the delay introduced by delay circuit 38 is correlated to the value assumed by second threshold value VTH2, and, since the current flow pattern in primary winding 24 of transformer 22 is known, can be calculated easily.

Converter 1' operates in the same way as dc-to-dc converter 1 already described.

The advantages of converters 1, 1' according to the present invention will be clear from the foregoing description.

As compared with known flyback resonant-transition converters employing the Snubber technique to reduce switching losses, the circuit structure of converters 1, 1' is much simpler by requiring only two additional comparator circuits having a substantially negligible effect on the final cost of the converters.

Clearly, changes may be made to the dc-to-dc converters as described and illustrated herein without, however, departing from the scope of the present invention.

For example, one of secondary windings 26 of converter 1' in the second embodiment need not be connected to a respective pair of output terminals 8, 10 of converter 1', and hence to a load, and may be used exclusively for determining the voltage VA at the terminals of the secondary windings; in which case, only first comparator circuit 32' would be connected to the terminals of said secondary winding.

Moreover, the instant in which the current flowing in primary winding 24 of transformer 22 is greater than or equal to the third threshold value may be detected otherwise than as described, and in particular also by detecting a voltage.

## Claims

1. A resonant-transition, DC-DC converter (1) comprising first and second input terminals (2, 4) intended to be connected, in use, to an electrical energy source (6); at least first and second output terminals (8, 10) intended to be connected, in use, to a load (12); a transformer (22) comprising a primary winding (24) connected between said first and second input terminals (2, 4), and at least one secondary winding (26) connected between said first and second output terminals (8, 10); a controlled switch (28) connected between said primary winding (24) and one of said first and second input terminals (2, 4) and having a control terminal configured to receive a logic control signal (T) having a first switching edge for closing said controlled switch (28) and a second switching edge for opening said controlled switch (28); capacitive means (30) connected in parallel to said controlled switch (28); voltage level indicating means (32; 32', 38) configured to sense an electric quantity related to a voltage (VC) across said capacitive means (30) and generate a first logic voltage level signal (VS1; VSR) having a switching edge when said voltage (VC) across said capacitive means (30) is lower than or equal to a threshold voltage (VTH1; VTH2); and control means (36) configured to receive said first voltage level signal (VS1; VSR) and generate said control signal (T) for said controlled switching means (28) and with said first switching edge generated in response to said switching edge of said first voltage level signal (VS1; VSR); **characterized in that** said resonant-transition, DC-DC converted (1) further includes current level indicating means (34) configured to sense an electric quantity related to a current flowing in said primary winding (24) of said transformer (22) and generate a logic current level signal (IS) having a switching edge when said current is higher than or equal to a threshold current (ITH); and **in that** said control means (36) are further configured to receive also said current level signal (IS) and generate said control signal (T) for said controlled switch (28) and with said second switching edge generated in response to said switching edge of said current level signal (IS).

2. The resonant-transition DC-DC converter of Claim 1, wherein said threshold voltage (VTH1; VTH2) conveniently ranges between zero and ten percent of a quantity related to a supply voltage (VB) of said electric energy source (6).

3. The resonant-transition DC-DC converter of Claim 1 or 2, wherein said threshold current (ITH) is a function of the power requested to said converter (1).

4. The resonant-transition DC-DC converter of any one of the foregoing Claims, wherein said threshold current (ITH) increases alongside an increase in the difference between a desired output voltage and an actual output voltage of said converter (1).

5. The resonant-transition DC-DC converter of any one of the foregoing Claims, wherein said current level indicating means comprise a current comparator (34) series connected to said primary winding (24) of said transformer (22).

6. The resonant-transition, DC-DC converter of Claim 1, wherein said voltage level indicating means comprise a voltage comparator (32) parallel connected to said capacitive means (30).

7. The resonant-transition DC-DC converter of any one of the foregoing Claims 1 to 5, wherein said voltage level indicating means comprise a voltage comparator (32') configured to sense an electric quantity related to a voltage (VA) across said secondary winding (26) of said transformer (22), and generate a second logic voltage level signal (VS2) having a switching edge when said voltage (VA) across said secondary winding (26) is lower than or equal to said threshold voltage (VTH2); and delay means (38) cascade connected to said voltage comparator (32') to generate said first voltage level signal (VSR) by delaying said second voltage level signal (VS2) by a delay (TB) which is a function of said threshold voltage (VTH2).

8. The resonant-transition DC-DC converter of Claim 7, wherein said voltage comparator (32') is parallel connected to said secondary winding (26) of said transformer (22).

9. The resonant-transition DC-DC converter of Claim 7, wherein said transformer (22) comprises a further secondary winding (26), and said voltage comparator (32') is parallel connected to said further secondary winding (26).

10. The resonant-transition DC-DC converter of any one of Claims 7 to 9, wherein said threshold voltage (VTH2) conveniently ranges between zero and ten percent of a quantity related to a supply voltage (VB) of said electric energy source (6) and to a transformation ratio of said transformer (22).

11. The resonant-transition DC-DC converter of any one of Claims 7 to 10, wherein said threshold voltage (VTH2) is substantially zero, and said delay (TB) between said switching edge of said first voltage level signal (VSR) and said switching edge of said second voltage level signal (VS2) equals:

$$TB = \frac{1}{2} \cdot \pi \cdot \sqrt{L \cdot C}$$

where TB is said delay, L is the inductance of said primary winding (24) of said transformer (22), and C is the capacitance of said capacitive means (30).

**Patentansprüche**

1. Ein resonanter-Übergang-Gleichstrom-Gleichstrom-Wandler (1), aufweisend einen ersten und einen zweiten Eingangsanschluss (2, 4), die im Gebrauch zum Verbinden mit einer elektrischen Energiequelle (6) vorgesehen sind, mindestens einen ersten und einen zweiten Ausgangsanschluss (8, 10), die im Gebrauch zum Verbinden mit einer Last (12) vorgesehen sind, einen Transformator (22), der eine zwischen dem ersten und dem zweiten Eingangsanschluss (2, 4) angeschlossene Primärwicklung (24) und mindestens eine zwischen dem ersten und dem zweiten Ausgangsanschluss (8, 10) angeschlossene Sekundärwicklung (26) aufweist, einen gesteuerten Schalter (28), der zwischen der Primärwicklung (24) und einem von dem ersten und dem zweiten Eingangsanschluss (2, 4) angeschlossen ist und einen Steueranschluss aufweist, der zum Empfangen eines Logiksteuersignals (T) konfiguriert ist, das eine erste Schaltflanke zum Schließen des gesteuerten Schalters (28) und eine zweite Schaltflanke zum Öffnen des gesteuerten Schalters (28) aufweist, kapazitive Mittel (30), die zu dem gesteuerten Schalter (28) parallel geschaltet sind, Spannungspegel-Anzeigemittel (32, 32', 38), die zum Erfassen einer elektrischen Größe in Bezug auf eine Spannung (VC) durch die kapazitiven Mittel (30) und zum Erzeugen eines ersten Logikpegelsignals (VS1, VSR) konfiguriert sind, das eine Schaltflanke aufweist, wenn die Spannung (VC) durch die kapazitiven Mittel (30) kleiner oder gleich einer Schwellenspannung (VTH1, VTH2) ist, und Steuermittel (36), die zum Empfangen des ersten Spannungspegel-Signals (VS1, VSR) und zum Erzeugen des Steuersignals (T) für die gesteuerten Schaltmittel (28) konfiguriert sind, und wobei die erste Schaltflanke in Antwort auf die Schaltflanke des ersten Spannungspegel-Signals (VS1, VSR) erzeugt wird, **dadurch gekennzeichnet, dass** der resonanter-Übergang-Gleichstrom-Gleichstrom-Wandler (1) ferner Strompegel-Anzeigemittel (34) aufweist, die zum Erfassen einer elektrischen Größe in Bezug auf einen in der Primärwicklung (24) des Transformators (22) fließenden Strom und zum Erzeugen eines Logik-Strompegel-Signals (IS) konfiguriert sind, das eine Schaltflanke aufweist, wenn der Strom größer oder gleich einem Schwellenstrom (ITH) ist, und dass die Steuermittel (36) ferner auch zum Empfangen des Strompegelsignals (IS) und zum Erzeugen des Steuersignals (T) für den gesteuerten Schalter (28) konfiguriert sind, und wobei die zweite Schaltflanke in Antwort auf die Schaltflanke des Strompegelsignals (IS) erzeugt wird.

2. Der resonanter-Übergang-Gleichstrom-Gleichstrom-Wandler gemäß Anspruch 1, wobei die Schwellenspannung (VTH1, VTH2) vorteilhafterweise zwischen null Prozent und zehn Prozent einer Größe in Bezug auf eine Versorgungsspannung (VB) der elektrischen Energiequelle (6) liegt.

3. Der resonanter-Übergang-Gleichstrom-Gleichstrom-Wandler gemäß Anspruch 1 oder 2, wobei der Schwellenstrom (ITH) von der von dem Wandler (1) angeforderten Leistung abhängig ist.

4. Der resonanter-Übergang-Gleichstrom-Gleichstrom-Wandler gemäß einem der vorhergehenden Ansprüche, wobei der Schwellenstrom (ITH) parallel zu einem Ansteigen der Differenz zwischen einer gewünschten Ausgangsspannung und einer tatsächlichen Ausgangsspannung des Wandlers (1) ansteigt.

5. Der resonanter-Übergang-Gleichstrom-Gleichstrom-Wandler gemäß einem der vorhergehenden Ansprüche, wobei die Strompegel-Anzeigemittel einen Stromvergleicher (34) aufweisen, der mit der Primärwicklung (24) des Transformators (22) in Reihe geschaltet ist.

6. Der resonanter-Übergang-Gleichstrom-Gleichstrom-Wandler gemäß Anspruch 1, wobei die Spannungspegel-Anzeigemittel einen Spannungsvergleicher (32) aufweisen, der zu den kapazitiven Mitteln (30) parallel geschaltet ist.

7. Der resonanter-Übergang-Gleichstrom-Gleichstrom-Wandler gemäß einem der vorhergehenden Ansprüche 1 bis 5, wobei die Spannungspegel-Anzeigemittel aufweisen: einen Spannungsvergleicher (32') der zum Erfassen einer elektrischen Größe in Bezug auf eine Spannung (VA) durch die Sekundärwicklung (26) des Transformators (22) und zum Erzeugen eines zweiten Logik-Spannungspegel-Signals (VS2) konfiguriert ist, das eine Schaltflanke aufweist, wenn die Spannung (VA) durch die zweite Wicklung (26) kleiner oder gleich der Schwellenspannung (VTH2) ist, und Verzögerungsmittel (38), die mit dem Spannungsvergleicher (32') kaskadengeschaltet sind, zum Erzeugen des ersten Spannungspegel-Signals (VSR) durch Verzögern des zweiten Spannungspegel-Signals (VS2) durch eine Verzögerung (TB), die von der Schwellenspannung (VTH2) abhängig ist.

8. Der resonanter-Übergang-Gleichstrom-Gleichstrom-Wandler gemäß Anspruch 7, wobei der Spannungsvergleicher (32') parallel zu der Sekundärwicklung (26) des Transformators (22) geschaltet ist.

9. Der resonanter-Übergang-Gleichstrom-Gleichstrom-Wandler gemäß Anspruch 7, wobei der Transformator (22) eine weitere Sekundärwicklung (26) aufweist und der Spannungsvergleicher (32') parallel zu der weiteren Sekundärwicklung (26) geschaltet ist.

10. Der resonanter-Übergang-Gleichstrom-Gleichstrom-Wandler gemäß einem der Ansprüche 7 bis 9, wobei die Schwellenspannung (VTH2) vorteilhafterweise zwischen null Prozent und zehn Prozent einer Größe in Bezug auf eine Versorgungsspannung (VB) der elektrischen Energiequelle (6) und ein Transformationsverhältnis des Transformators (22) liegt.

11. Der resonanter-Übergang-Gleichstrom-Gleichstrom-Wandler gemäß einem der Ansprüche 7 bis 10, wobei die Schwellenspannung (VTH2) im Wesentlichen null beträgt und die Verzögerung (TB) zwischen der Schaltflanke des ersten Spannungspegel-Signals (VSR) und der Schaltflanke des zweiten Spannungspegel-Signals (VS2) wie folgt ist:

$$TB = \frac{1}{2} \cdot \pi \cdot \sqrt{L \cdot C},$$

wobei TB die Verzögerung ist, L die Induktivität der Primärwicklung (24) des Transformators (22) ist und C die Kapazität der kapazitiven Mittel (30) ist.

## Revendications

1. Convertisseur continu-continu (courant continu) à résonance-transition (1) comportant des première et seconde bornes d'entrée (2, 4) destinées à être connectées, en utilisation, à une source d'énergie électrique (6), au moins des première et seconde bornes de sortie (8, 10) destinées à être connectées, en utilisation, à une charge (12), un transformateur (22) comportant un enroulement primaire (24) connecté entre lesdites première et seconde bornes d'entrée (2, 4), et au moins un enroulement secondaire (26) connecté entre lesdites première et seconde bornes de sortie (8, 10), un commutateur commandé (28) connecté entre ledit enroulement primaire (24) et l'une desdites première et seconde bornes (2,4) et ayant une borne de commande configurée pour recevoir un signal de commande logique (T) ayant un premier bord de commutation pour fermer ledit commutateur commandé (28) et un second bord de commutation pour ouvrir ledit commutateur commandé (28), des moyens capacitifs (30) connectés en parallèle avec ledit commutateur commandé (28), des moyens d'indication de niveau de tension (32 ; 32', 38) configurés pour détecter une quantité électrique associée à une tension (VC) à travers lesdits moyens capacitifs (30) et générer un premier signal de niveau de tension logique (VS1 ; VSR) ayant un bord de commutation lorsque ladite tension (VC) à travers lesdits moyens capacitifs (30) est inférieure ou égale à une tension de seuil (VTH1 ; VTH2), et des moyens de commande (36) configurés pour recevoir ledit premier signal de niveau de tension (VS1 ; VSR) et générer ledit signal de commande (T) pour lesdits moyens de commutation commandés (28) et avec ledit premier bord de commutation généré en réponse audit bord de commutation dudit premier signal de niveau de tension (VS1 ; VSR), **caractérisé en ce que** ledit convertisseur continu-continu à résonance-transition (1) inclut en outre des moyens d'indication de niveau de courant (34) configurés pour détecter une quantité électrique associée à un courant circulant dans ledit enroulement primaire (24) dudit transformateur (22) et générer un signal de niveau de courant logique (IS) ayant un bord de commutation lorsque ledit courant est supérieur ou égal à un courant de seuil (ITH), et **en ce que** lesdits moyens de commande (36) sont en outre configurés pour recevoir également ledit signal de niveau de courant (IS) et générer ledit signal de commande (T) pour ledit commutateur commandé (28) et avec ledit second bord de commutation généré en réponse audit bord de commutation dudit signal de niveau de courant (IS).

2. Convertisseur continu-continu à résonance-transition (1) selon la revendication 1, dans lequel ladite tension de seuil (VTH ; VTH2) est comprise de manière appropriée entre zéro et dix pourcents d'une quantité associée à une tension d'alimentation (VB) de ladite source d'énergie électrique (6).

3. Convertisseur continu-continu à résonance-transition (1) selon la revendication 1 ou 2, dans lequel ledit courant de seuil (ITH) est fonction de la puissance demandée audit convertisseur (1).

4. Convertisseur continu-continu à résonance-transition (1) selon l'une quelconque des revendications précédentes, dans lequel ledit courant de seuil (ITH) augmente en relation avec une augmentation de la différence entre une tension de sortie voulue et une tension de sortie réelle dudit convertisseur (1).

5. Convertisseur continu-continu à résonance-transition (1) selon l'une quelconque des revendications précédentes, dans lequel lesdits moyens indiquant un niveau de courant comportent un comparateur de courant (34) connecté en série avec ledit enroulement primaire (24) dudit transformateur (22).

6. Convertisseur continu-continu à résonance-transition (1) selon la revendication 1, dans lequel lesdits moyens d'indication de niveau de courant comportent un comparateur de tension (32) connecté en parallèle avec lesdits moyens capacitifs (30).

7. Convertisseur continu-continu à résonance-transition (1) selon l'une quelconque des revendications précédentes 1 à 5, dans lequel lesdits moyens d'indication de niveau de tension comportent un comparateur de tension (32') configuré pour détecter une quantité électrique associée à une tension (VA) à travers ledit enroulement secondaire (26) dudit transformateur (22), et générer un second signal de niveau de tension logique (VS2) ayant un bord de commutation lorsque ladite tension (VA) à travers ledit enroulement secondaire (26) est inférieure ou égale à ladite tension de seuil (VTH2), et des moyens de retard (38) connectés en cascade avec ledit comparateur de tension (32') afin de générer ledit premier signal de niveau de tension (VSR) en retardant ledit second signal de niveau de tension (VS2) d'un retard (TB) qui est fonction de ladite tension de seuil (VTH2).

8. Convertisseur continu-continu à résonance-transition (1) selon la revendication 7, dans lequel ledit comparateur de tension (32') est connecté en parallèle avec ledit enroulement secondaire (26) dudit transformateur (22).

9. Convertisseur continu-continu à résonance-transition (1) selon la revendication 7, dans lequel ledit transformateur (22) comporte un enroulement secondaire supplémentaire (26), et ledit comparateur de tension (32') est connecté en parallèle avec ledit enroulement secondaire supplémentaire (26).

10. Convertisseur continu-continu à résonance-transition (1) selon l'une quelconque des revendications 7 à 9, dans lequel ladite tension de seuil (VTH2) est comprise de manière appropriée entre zéro et dix pourcents d'une quantité associée à une tension d'alimentation (VB) de ladite source d'énergie électrique (6) et à un rapport de transformation dudit transformateur (22).

11. Convertisseur continu-continu à résonance-transition (1) selon l'une quelconque des revendications 7 à 10, dans lequel ladite tension de seuil (VTH2) est sensiblement égale à zéro, et ledit retard (TB) entre ledit bord de commutation dudit premier signal de niveau de tension (VSR) et ledit bord de commutation dudit second signal de niveau de tension (VS2) est égal à :

$$TB = \frac{1}{2} \cdot \pi \cdot \sqrt{L \cdot C}$$

où TB est ledit retard, L l'inductance dudit enroulement primaire (24) dudit transformateur (22), et C est la capacité desdits moyens capacitifs (30).

EP 1 047 178 B1

Fig.1

Fig.3

10

Fig.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5680034 A

**Non-patent literature cited in the description**

• **Addison Wesley ; J. G. Kassakian ; M. F. Schlecht ; G. C. Verghese.** *Principles of Power Electronics*

• **J. B. Lio et al.** Single-switch soft-switching flyback converter. *Electronics Letters,* vol. 32 (16), ISSN 0013-5194, 1429-1430